Europäisches Patentamt

European Patent Office

Office européen des brevets

(11) Publication number: **0 471 223 A1**

## EUROPEAN PATENT APPLICATION

(21) Application number: **91112516.9**

(22) Date of filing: **25.07.91**

(51) Int. Cl.⁵: **G01N 29/10, G01N 29/22**

(30) Priority: **13.08.90 US 566024**

(43) Date of publication of application:
**19.02.92 Bulletin 92/08**

(84) Designated Contracting States:
**BE DE ES FR GB IT SE**

(71) Applicant: **WESTINGHOUSE ELECTRIC CORPORATION**
**Westinghouse Building Gateway Center**
**Pittsburgh Pennsylvania 15222(US)**

(72) Inventor: **Kutchenriter, Kevin Wayne**
**216 N. Shenandoah Drive, Apt. 304**
**Latrobe, Pennsylvania 15650(US)**
Inventor: **Moga, Leo Jon**
**1030 Green Street**
**Jeannette, Pennsylvania 15644(US)**
Inventor: **Li, Dali**
**184 Penn Lear Drive**
**Monroeville, Pennsylvania 15146(US)**
Inventor: **Moran, Robert Joseph**
**2656 Shelly Drive**
**Indiana, Pennsylvania 15701(US)**

(74) Representative: **Gallo, Wolfgang, Dipl.-Ing. (FH) et al**
**Patentanwälte Dipl.-Ing. L. Fleuchaus, Dipl.-Phys. H. Schroeter, Dipl.-Ing K. Lehmann, Dipl.-Ing.W. Wehser, Dipl.-Ing.(FH) W. Gallo, Ludwigstrasse 26**
**W-8900 Augsburg(DE)**

(54) **Apparatus and method for acquiring and processing dimension and flaw data on ultrasonically-inspected tubes.**

(57) A data acquiring and processing apparatus (10) includes a data acquiring portion (14) having a peak and hold component (18) and a sample and hold component (20) for receiving analog signals representing measured parameters of a workpiece being inspected and producing analog signals representing maximums and minimums of the measured parameters. The apparatus also includes a data processing portion having an analog-to-digital converter and a computer for converting analog signals to digital signals representing the maximum and minimum magnitudes of the measured parameters and storing the digital signals to make them accessible upon demand to an operator for analysis.

EP 0 471 223 A1

FIG. 2A

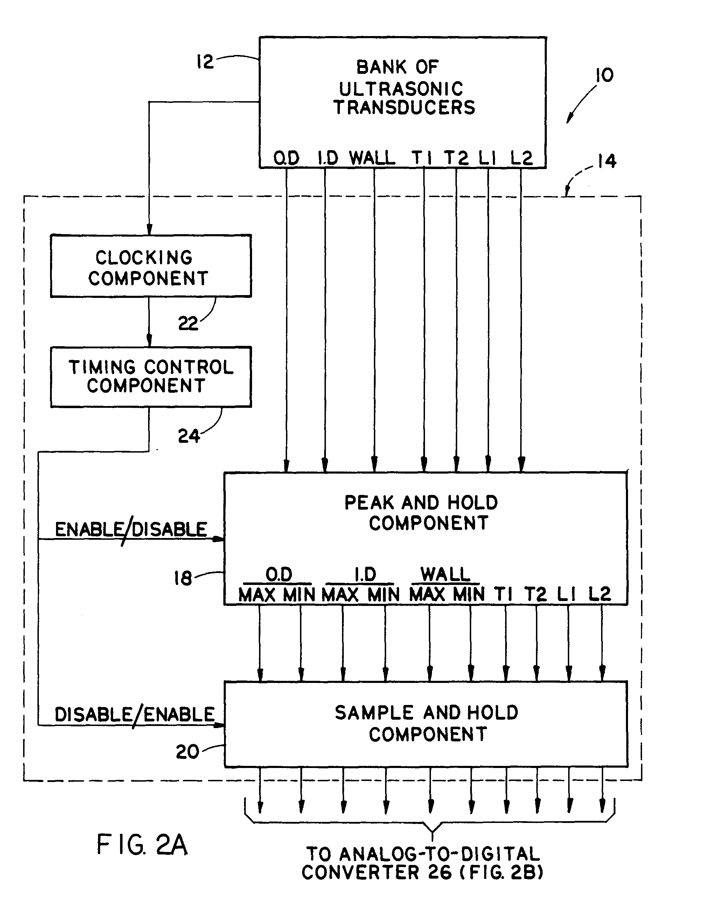

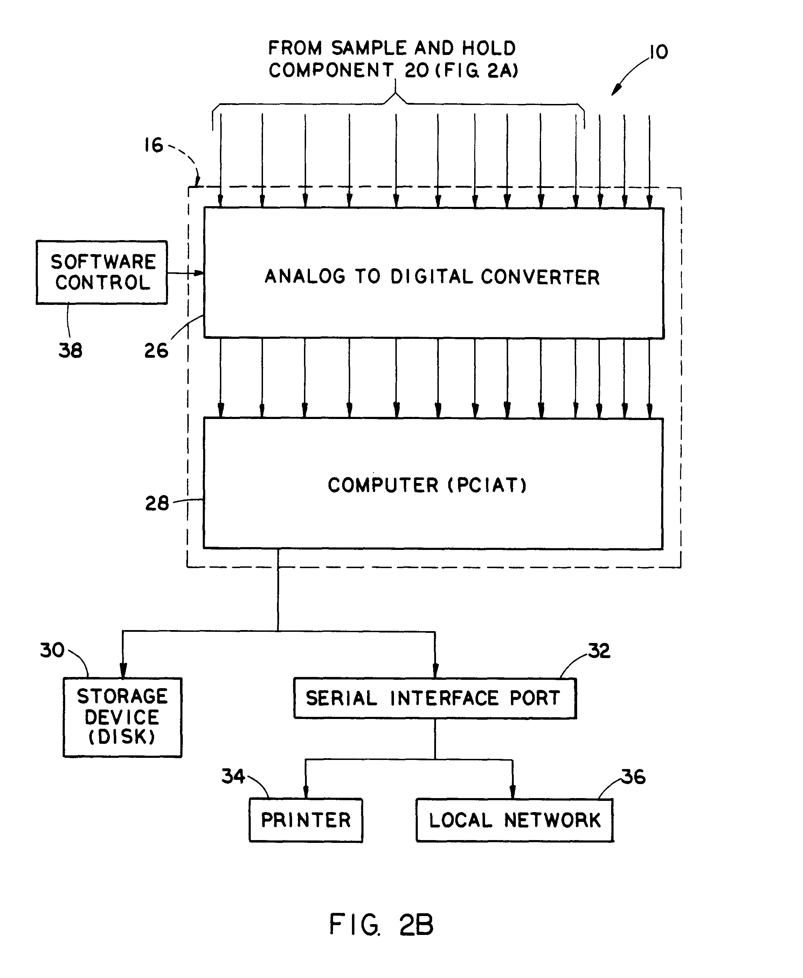

TO ANALOG-TO-DIGITAL
CONVERTER 26 (FIG. 2B)

The present invention relates generally to tube quality inspection, and more particularly, to an apparatus and method for acquiring and processing dimension and flaw data on tubes inspected ultrasonically.

Because of their critical roles in fuel, control and instrumentation rods in nuclear reactors, tubes composed of zirconium and other materials must meet very stringent quality control standards. Parameters of interest are typically outside diameter, inside diameter, and wall thickness of the tube and material flaws in the tube. Ultrasonic inspection is one common method used to identify unacceptable dimensional deviations and material flaws in the tube.

These parameters of the tube are measured by ultrasonic transducers which send out ultrasound waves, pick up the echo of such waves and transform it into voltage signals which are recorded on a strip chart. These transducers, located in tanks filled with water, read the tube dimensions and flaws as a drive system feeds the tube through the tank. One conventional ultrasonic tube inspection system is disclosed in U. S. Patent 3,828,609 to Furon et al. One conventional tube drive apparatus is disclosed in U. S. Patent 4,735,541 to Clarence D. John, Jr. which is assigned to the assignee of the present invention.

In conventional ultrasonic tube inspection systems, the information or data derived from the transducer readings is recorded on a continuous paper tape by a strip chart analog system. This approach has several drawbacks. First, it records so much data that it cannot be analyzed and used by an operator in a timely fashion. Second, the data recorded on the continuous paper tape is so difficult to read that frequently the operator must use a magnifying glass. Third, the mechanical limitations of the system do not permit achievement of the level of accuracy desired in the recorded data. Thus, the strip chart analog system does not adequately report the tube parameters of interest and the collection of data on paper tape by system is not an efficient means for acquiring and analyzing the data.

Consequently, a need exists for improvements in ultrasonic tube inspection systems which will eliminate the above-mentioned drawbacks.

The present invention provides a dimension and flow data acquiring and processing apparatus and method designed to satisfy the aforementioned needs. The apparatus and method of the present invention permit storing and recording of more data and the extracting of more sensitive and meaningful readings pertaining to the parameters of the tube being inspected than can be achieved with the prior art strip chart system. These more sensitive readings facilitate determining whether tubes found to have flaws or out-of-tolerance dimensions are capable of being modified or should be scrapped altogether. Also, the operator can more readily analyze the data to adjust the production process to correct and eliminate the anomalous condition.

Accordingly, the present invention relates to a data acquiring and processing apparatus for receiving analog signals representing measured parameters of a workpiece being inspected. The data acquiring and processing apparatus comprises: (a) a data acquiring means for receiving the analog signals representing the measured parameters of the workpiece and for holding and sampling the signals for a preset period of time to read maximum and minimum magnitudes thereof and produce analog output signals representing the maximum and minimum magnitudes; and (b) a data processing means connected to the data acquiring means for receiving and converting the analog output signals to produce digital output signals representing the maximum and minimum magnitudes and store the digital signals so as to make them accessible upon demand for analysis by an operator.

The present invention also relates to a data acquiring and processing method for receiving analog signals representing measured parameters of a workpiece being inspected. The method comprises the steps of: (a) receiving analog signals representing measured parameters of a workpiece being inspected; (b) holding the analog signals for a preset period of time; (c) sampling the signals being held to read maximum and minimum magnitudes thereof and produce analog output signals representing the maximum and minimum magnitudes; (d) receiving the analog output signals; (e) converting the analog output signals to digital output signals representing the maximum and minimum magnitudes; and (f) storing the digital output signals to make them accessible upon demand for analysis by an operator.

The present invention will be described herein by way of example with reference to the attached drawings, in which:

Fig. 1 is a block diagram of a data acquiring and processing apparatus in accordance with the present invention shown connected to a bank of ultrasonic inspection transducers.

Fig. 2A is a block diagram of a data acquiring portion of the data acquiring and processing apparatus of Fig. 1 shown connected to the bank of ultrasonic transducers.

Fig. 2B is a block diagram of a data processing portion of the data acquiring and processing apparatus.

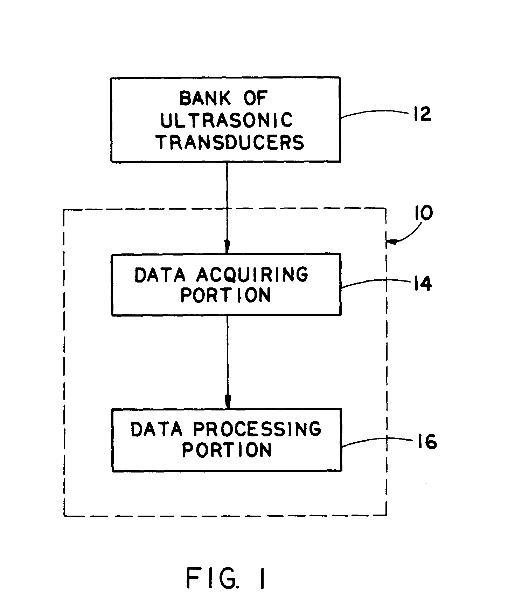

Referring to the drawings, and particularly to Fig. 1, there is shown a data acquiring and processing apparatus, generally designated 10, constructed in accordance with the principles of the present invention. The apparatus 10 is electrically connected to an arrangement or bank of ultrasonic inspection transducers 12. The bank of ultrasonic inspection transducers 12 are operable in a known manner to measure the various tube parameters of interest by sending out ultrasound waves, picking up the echoes of such waves, and transforming them into voltage signals. Referring to Fig. 2A, the parameters of interest are typically outside diameter (OD), inside diameter (ID), and wall thickness (WALL) of a tube and transverse flaws (T1, T2) and longitudinal flaws (L1, L2) in the tube.

Since the novelty of the data acquiring and processing apparatus 10 resides in the combination and arrangement of its components and not in the specific details of the components, it is not necessary nor beneficial for promoting an understanding of the present invention to illustrate or describe the construction of these components in detail. Such description would tend to burden the disclosure with details which are otherwise readily apparent to those skilled in the art in view of the functional description of these components presented hereinafter.

Referring again to Fig. 1, the data acquiring and processing apparatus 10 basically is composed of a data acquiring portion 14 for receiving analog signals representing measured parameters of a workpiece, such as a metal tube, being inspected, and a data processing portion 16 for producing digital signals representing maximum and minimum magnitudes of the measured parameters which are accessible upon demand to an operator for analysis. Referring to Fig. 2A, the data acquiring portion 14 includes a peak and hold component 18, a sample and hold component 20, a clocking component 22 and a timing control component 24.

The peak and hold component 18 has a plurality of inputs connected to outputs (OD, ID, WALL, T1, T2, L1, L2) of the ultrasonic transducers 12 where voltage signals representing the measured parameters of the tube are received and collected. The component 18 also has a plurality of outputs corresponding to its inputs where the voltage signals representing the measured parameters are held for sensing by the sample and hold component 20. The sample and hold component 20 has a plurality of inputs connected to the outputs of the peak and hold component 18 and being operable for sampling the analog signals on the outputs of the peak and hold component 18 to read the maximum and minimum magnitudes of the measured parameters and to produce and hold at its outputs analog output signals representing the maximum and minimum magnitudes.

The clocking component 22 of the data acquiring portion 14 generates a timing signal corresponding to each cycle, such as each revolution of the tube being inspected, that measurements are taken on the tube. The timing control component 24 is connected to the clocking component 22 and receives the timing signal and causes operation of the peak and hold component 18 and the sample and hold component 20 in alternate cycles. Thus, the peak and hold component 18 holds at its outputs the analog signals representing measured parameters of the workpiece for a preset period of time after which the component 18 is reset. The sample and hold component 20 holds at its output for the preset period of time the analog output signals representing the maximum and minimum magnitudes. In other words, the timing signal generated by the clocking component 22 corresponds to each cycle measurements are taken on the tube. The timing control component 24 which is connected between the clocking component 22 and the components 18 and 20 in response to receipt of each timing signal alternately enables and disables the peak and hold component 18 and the sample and hold component 20.

Referring to Fig. 2B, the data processing portion 16 of the data acquiring and processing apparatus 10 includes a multi-channel analog-to-digital converter 26 and suitable data storing and accessing means such as a personal computer 28. Other components are connected downstream of the computer 28, such as a storage device (optical disk) 30, a serial interface port 32, a printer 34 and a local network 36. The latter components are not part of the present invention and need not be discussed further.

The converter 26 is connected to the output of the sample and hold component 20 and is controlled by software 38. The computer 28 is connected to the outputs of the converter 26 and permits storing of the digital output signals and accessing the digital signals upon demand by the operator for analysis.

The apparatus 10 permits data to be acquired at a rapid rate. For example, in ultrasonic tube inspection, as the tube rotates at 6000 rpm, the apparatus 10 is capable of making 10,000 readings per second. The peak and hold and sample and hold components 18, 20 collect the readings at that rate and reduce the amount of data by extracting solely the maximum and minimum readings for each cycle or revolution. One revolution equals 0.08 inches. The computer 28 stores these readings for each 0.08 inches. Thus, the peak detection holds voltages for a very short time, such as 10 milliseconds, as controlled by the timing signals. The data reduction provides meaningful readings for the operator to analysis in order to determine where problems exist and where trends are indicating that potential problems may develop in the tube production line so that meaningful corrective action can be taken.

By way of example, the components of the apparatus 10 can be implemented as follows. The peak and hold component 18 can be R&M Electronics, a clocking component 22 can be R&M Electronics, and a timing control component 24 can be R&M Electronics. The A-to-D converter 26 can be Metrabyte and the computer 28 can be IBM (PS-2).

| IDENTIFICATION OF REFERENCE NUMERALS USED IN THE DRAWINGS | | |
|---|---|---|
| LEGEND | REF. NO. | FIGURE |
| BANK OF ULTRASONIC TRANSDUCERS | 12 | 1 |
| DATA ACQUIRING PORTION | 14 | 1 |
| DATA PROCESSING PORTION | 16 | 1 |
| SAMPLE AND HOLD COMPONENT | 20 | 2A |
| CLOCKING COMPONENT | 22 | 2A |
| TIMING CONTROL COMPONENT | 24 | 2A |
| ANALOG TO DIGITAL CONVERTER | 26 | 2B |
| COMPUTER (PCIAT) | 28 | 2B |
| STORAGE DEVICE (DISK) | 30 | 2B |
| SERIAL INTERFACE PORT | 32 | 2B |
| PRINTER | 34 | 2B |
| LOCAL NETWORK | 36 | 2B |
| SOFTWARE CONTROL | 38 | 2B |

## Claims

1. A data acquiring and processing apparatus (10) for receiving analog signals representing measured parameters of a workpiece being inspected, said apparatus comprising:
   (a) a data acquiring means (14) for receiving analog signals representing measured parameters of a workpiece being inspected and for holding and sampling the analog signals for a preset period of time to read maximum and minimum magnitudes of the measured parameters and produce analog output signals representing the maximum and minimum magnitudes; and
   (b) a data processing means (16) connected to said data acquiring means (14) for receiving and converting the analog output signals to produce digital output signals representing the maximum and minimum magnitudes of the measured parameters and for storing such magnitudes so as to make them accessible upon demand for analysis by an operator.

2. The apparatus (10) as recited in Claim 1, wherein said data acquiring means (14) includes a peak and hold component (18) having an input and an output and being operable for collecting at its input and holding at its output analog signals representing measured parameters of a workpiece being inspected.

3. The apparatus (10) as recited in Claim 2, wherein said data acquiring means (14) also includes a sample and hold component (20) having an input and output, said sample and hold component (20) at its input connected to said output of said peak and hold component (18) and being operable for sampling at its input the analog signals on said output of said peak and hold component (18) to read the maximum and minimum magnitudes of the measured parameters and to produce and hold at its output analog output signals representing the maximum and minimum magnitudes.

4. The apparatus (10) as recited in Claim 3, wherein said data acquiring means (14) further includes timing means (24) for alternately operating said peak and hold component (18) and sample and hold component (20) such that said peak and hold component (18) holds at its output said analog signals representing measured parameters of the workpiece for a preset period of time after which said component is reset and said sample and hold component (20) holds at its output for said preset period of time said analog output signals representing the maximum and minimum magnitudes.

5. The apparatus (10) as recited in Claim 4, wherein said timing means (24) includes a clocking component (22) for generating a timing signal corresponding to each cycle measurements are taken on the workpiece.

6. The apparatus (10) as recited in Claim 5, wherein said timing means (24) further includes a timing control component (22) connected to said clocking component and in response to receipt of each timing signal alternately enabling and disabling said peak and hold component (18) and said sample and hold component (20).

7. The apparatus (10) as recited in Claim 3, wherein said data processing means (16) includes a multi-channel analog-to-digital converter (26) connected to said output of said sample and hold component (20).

8. The apparatus (10) as recited in Claim 7, wherein said data processing means (16) further includes a computer (28) for storing and accessing the digital signals for analysis.

9. A data acquiring and processing method for receiving analog signals representing measured parameters of a workpiece being inspected, said method comprising the steps of:
   (a) receiving analog signals representing parameters of a workpiece being inspected;
   (b) holding the analog signals for a preset period of time;
   (c) sampling the signals being held to read maximum and minimum magnitudes thereof and produce analog output signals representing said maximum and minimum magnitudes;
   (d) receiving said analog output signals;
   (e) converting said analog output signals to digital output signals representing said maximum and minimum magnitudes; and
   (f) storing said digital output signals to make them accessible upon demand for analysis by an operator.

10. The method as recited in Claim 9, wherein said holding and sampling are performed repetitively on successive cycles of measured parameters.

BANK OF
ULTRASONIC
TRANSDUCERS — 12

DATA ACQUIRING
PORTION — 14

DATA PROCESSING
PORTION — 16

10

FIG. 1

FIG. 2A

TO ANALOG-TO-DIGITAL
CONVERTER 26 (FIG. 2B)

FIG. 2B

European Patent Office

**EUROPEAN SEARCH REPORT**

Application Number

**EP 91 11 2516**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 620 444   (YOUNG)<br>* Column 2, line 63 - column 4, line 45; figure * | 1-3,8-10 | G 01 N 29/10<br>G 01 N 29/22 |
| A | US-A-4 799 177   (SARR)<br>* Abstract; figures 4,6 * | 1,9 | |
| A | GB-A-2 130 368   (U.K. ATOMIC ENERGY AUTHORITY)<br>* Page 2, line 100 - page 3, line 4; figure 4 * | 1,9 | |
| A | DE-A-3 418 486   (KRAUTKRÄMER GmbH)<br>* Abstract * | 1,9 | |

TECHNICAL FIELDS
SEARCHED (Int. Cl.5)

G 01 N

The present search report has been drawn up for all claims

| Place of search | Date of completion of search | Examiner |
|---|---|---|
| The Hague | 25 October 91 | KOUZELIS D. |